# EUROPÄISCHE PATENTSCHRIFT

(11) **EP 0 408 024 B1**
(45) Veröffentlichungstag und Bekanntmachung des Hinweises auf die Patenterteilung: **06.12.1995**
(21) Anmeldenummer: 90113311.6
(22) Anmeldetag: 12.07.1990
(51) Int. Cl.: H04Q 11/04, H04M 11/06, H04M 3/00, H04Q 7/26

(54) **Universelle ISDN-Teilnehmeranschlussbaugruppe**
Universal ISDN subscriber line connection group
Groupe de connexion universel de ligne d'abonné RNIS

(30) Priorität: 13.07.1989 DE 3923125
(43) Veröffentlichungstag der Anmeldung: 16.01.1991
(73) Patentinhaber: Alcatel SEL Aktiengesellschaft, D-70435 Stuttgart (DE)
(72) Erfinder: Huzenlaub, Richard, D-7545 Höfen (DE); Junius, Peter, D-7120 Bietigheim (DE)
(74) Vertreter: Pohl, Herbert, Dipl.-Ing.

(56) Entgegenhaltungen:
- EP-A- 0 192 894
- EP-A- 0 350 402
- DE-A- 3 630 529
- DE-C- 3 917 029
- US-A- 4 722 082
- ELEKTRONIK, Band 38, Heft 13, Juni 1989, Seiten 76-86, München, DE; I. RUGE et al.: "Schlüsseltechnologie Mikroelektronik. 14. Teil: Auf dem Weg zu hochintegrierten Telecom-Systemen"
- COMMUTATION & TRANSMISSION, Band 9, Nr. 3, September 1987, Seiten 35-50, Paris, FR; J.-L. LAVOISARD et al.: "Les installations terminales d'abonnes"
- ELECTRONICS DESIGN, Band 32, Nr. 15, Juli 1984, Seiten 171-176,178, Waseca, MN, Denville, NJ, US; W. BOURGONJE: "Twisted-pair bus carries speech, data, text, and images"

## Beschreibung

Die Erfindung betrifft eine Teilnehmeranschlußbaugruppe zum Anschließen einer Vielzahl von Teilnehmerendgeräten an ein diensteintegrierendes digitales Fernmeldenetz ISDN.

Im ISDN ist zum Anschluß von Teilnehmerendgeräten der sogenannte Netzabschluß NT definiert, der netzseitig über die ebenfalls definierte Uₒ-Schnittstelle den Übertragungsabschnitt zur Teilnehmervermittlungsstelle abschließt und teilnehmerseitig, d.h. zum Anschluß von digitalen Endgeräten, eine international genormte Teilnehmer-Netz-Schnittstelle Sₒ enthält. An die Sₒ-Schnittstelle sind digitale (ISDN)-Endgeräte direkt anschließbar.

Zum Anschluß analoger Endgeräte, die nur für den Anschluß an ein analoges Fernsprechnetz vorgesehen sind, ist eine Endgeräteanpassung TA zwischen Endgerät und Sₒ-Schnittstelle notwendig (ISDN-Praxis, K.H. Rosenbrock, G. Hentschel, Loseblatt-Ausgabe, ISBN-3-923759-10-X (Grundwerk 1988), Kapitel 3.2 und 5.4).

Gerade dann, wenn bereits vorhandene, in Analogtechnik arbeitende Endgeräte weiter verwendet werden sollen, stellt diese Endgeräteanpassung TA ein sehr teuere Lösung dar.

Aus der nicht vorveröffentlichten älteren europäischen Patentanmeldung EP-A-0 350 402 ist ein Personal Computer mit einem Bus, an dem eine zentrale Steuerung, sowie eine Vielzahl von mit dem Bus verbundenen Einsteckkarten angeschlossen sind, zu entnehmen. Diese Einsteckkarten weisen je eine eigene Steuerung auf und sind somit unabhängig von der Zentralsteuerung des Personal Computers. Diese Einsteckkarten ermöglichen den Anschluß von analogen wie auch von digitalen Teilnehmern und stellen auch die Verbindung zu einem digitalen Netz her.

Weiterhin ist eine zum Anschließen einer Vielzahl von Teilnehmerendgeräten an ein ISDN vorgesehene Teilnehmeranschlußbaugruppe bekannt (Commutation et Transmission, Band 9, Nr. 3, Seiten 30-50, September 1987, Paris FR, Lavoisard et al), die eine digitale Netzschnittstelle (T) und, teilnehmerseitig, je nach Größe eine oder mehrere Sₒ-Schnittstellen oder analoge Z-Schnittstellen zur Verfügung stellen. Dabei wird ein sogenanntes Bussystem vorgestellt, welches eine direkte Verbindung zwischen einer S und einer T-Schnittstelle erlaubt. Dann gibt es ein Steuerungssystem in Art einer kleinen Nebenstellenanlage und es gibt ein großes heterogenes System, welches in Art eines LAN's arbeitet.

Der Erfindung liegt die technische Aufgabe zugrunde, eine universelle Teilnehmeranschlußbaugruppe zu realisieren, die mit geringem Aufwand den Anschluß von beliebigen analogen und digitalen Endgeräten sowie drahtlosen Endgeräten an ein diensteintegrierendes digitales Fernmeldenetz ISDN ermöglicht.

Diese Aufgabe wird erfindungsgemäß durch die Lehre des Patentanspruchs 1 gelöst.

Durch die universelle Teilnehmeranschlußbaugruppe, die in vorteilhafter Weise Bestandteil eines digitalen Endgerätes sein kann, wird, gesteuert durch einen ohnehin im Regelfall vorhandenen Mikroprozessor, eine "kleine" Vermittlungsstelle mit analogen und digitalen Endgeräten realisiert, so daß eine Steuerung eines Internverkehrs zwischen analogen und analogen oder analogen und digitalen oder digitalen und digitalen Endgeräten in einfachster Weise möglich ist. Zusätzlich können ISDN-Leistungsmerkmale an den analogen Endgeräten umgesetzt werden.

Durch die universelle Teilnehmeranschlußbaugruppe ist, durch entsprechende Programmierung der Steuereinheit und Abspeicherung von Konfigurations-Parametern, prinzipell jedes beliebige analoge Endgerät zusammen mit einem oder mehreren digitalen Endgerät bzw. Endgeräten im ISDN betreibbar.

Weitere vorteilhafte Ausgestaltungen des Gegenstandes der Erfindung sind den abhängigen Ansprüchen zu entnehmen.

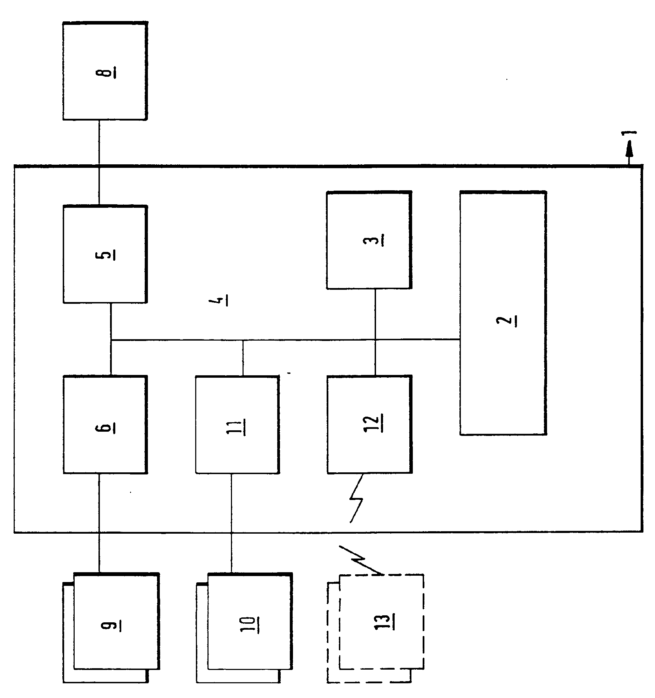

Ein Ausführungsbeispiel wird im folgenden anhand der Zeichnung erläutert.

Die Zeichnung zeigt ein Prinzipschaltbild der erfindungsgemäßen universellen Teilnehmeranschlußbaugruppe.

Eine universelle Teilnehmeranschlußbaugruppe 1 besteht aus einer Steuereinehit 2, die einen digitalen Speicher 3 enthält. Die Steuereinheit 2 und der Speicher 3 sind untereinander mit einem internen Systembus 4 verbunden.

Weiterhin ist eine digitale Teilnehmer-Schnittstelle 6, d.h. eine Sₒ-Schnittstelle, zum Anschluß digitaler (ISDN)-Endgeräte 9 mit dem Systembus 4 verbunden.

Zum Anschluß von analogen Endgeräten 10 ist eine analoge Teilnehmerschnittstelle 11 mit dem Systembus 4 verbunden.

Zusätzlich ist, wie in der Figur gezeigt, eine Funkteilnehmer-Schnittstelle 12 für drahtlose Endgeräte 13, wie z.B. schnurlose Telefonapparate, mit dem Systembus 4 verbunden. Ferner weist die universelle Teilnehmeranschlußbaugruppe 1 eine mit dem Systembus 4 verbundene digitale Netzschnittstelle 5, eine sogenannte Uₒ-Schnittstelle auf, die zur Herstellung einer Verbindung mit einem diensteintegrierenden digitalen Fernmeldenetz 8 dient.

Üblicherweise notwendige Teile, wie Strom- und Taktversorgung sind aus Gründen der Übersichtlichkeit nicht dargestellt.

Um nun universell alle analogen und digitalen Endgeräte mit dem digitalen Netz verbinden zu können, enthält der digitale Speicher 3 der Steuereinheit 2 die zur funktionalen Steuerung und Übewachung notwendigen Konfigurations-Parameter.

Dadurch kann die erfindungsgemäße Teilnehmeranschlußbaugruppe 1 durch einfache Programmierung an jegliche Endgerätekonfigurationen angepaßt werden.

Um auf das digitale Fernmeldenetz ISDN - 2 x 64 kbit/s B-Kanäle für Nachrichten, 1 x 16 kbit/s D-Kanal für Signalisierung - zugreifen zu können, ist der interne Systembus 4 wie folgt aufgebaut. Der Rahmen besteht aus vier Oktetten, wobei in den ersten zwei Oktetten zwei 64 kbit/s B-Kanäle, im dritten Oktett Überwachungsinformation und im vierten Oktett Signalisierungs- und Steuerinformation übertragen wird (davon 2 Bit für den D-Kanal).

Die Teilnehmerschnittstellen 6, 11, 12 übernehmen die Umsetzung von und zum internen Systembus 4. Dabei ist die digitale Teilnehmerschnittstelle 6 als Sₒ-Schnittstelle oder als U_{Po}-Schnittstelle für ISDN-Endgeräte ausgelegt, wobei eine 4- bzw. 2-Draht Anschaltung möglich ist.

Über die analoge Teilnehmerschnittstelle 11 erfolgt eine Anpassung einer analogen Anschlußleitung (a/b) oder eines mit analogen Endgeräten verbundenen Bussystemes auf den internen Systembus 4, wobei die analoge Teilnehmerschnittstelle 11 in wesentlichen eine 2-Draht-/4-Draht-Umsetzung und eine Signalisierungs-Umsetzung durchführt und zur Analog-Digital-Wandlung oder Digital-Analog-Wandlung einen Codec beinhaltet.

Entsprechend erfolgt über die Funkteilnehmer-Schnittstelle 12 eine Umsetzung auf den internen Systembus 4 für drahtlose Endgeräte 13, wie z.B. für schnurlose Telefone.

Zusätzlich ermöglicht die erfindungsgemäße Teilnehmeranschlußbaugruppe für die teilnehmerseitig angeschlossenen Endgeräte 9, 10, 13 einen Internverkehr. Zur Durchführung eines teilnehmerseitigen Internverkehrs sind im digitalen Speicher 3 vorgegebene Signalisierungssequenzen abgelegt, so daß infolge eines teilnehmerseitigen Verbindungsaufbaus, gesteuert durch die Steuereinheit 2, eine Durchschaltung einer Verbindung zwischen zwei Endgeräten erfolgt, ohne daß eine Signalisierung über die Uₒ-Schnittstelle 5 zum ISDN-Netz 8 erfolgt.

Es können Verbindungen zwischen analogen und digitalen Endgeräten oder zwischen analogen und analogen Endgeräten aber auch zwischen digitalen und digitalen Endgeräten hergestellt werden (z.B. Familientelefonanlage mit analogen Geräten, einem schnurlosen Telefon und einem ISDN-Endgerät).

Ein ankommender Ruf wird, gesteuert durch die Steuereinheit 2, parallel über die Teilnehmerschnittstelle 6, 11, 12 an alle angeschlossenen Endgeräte 9, 10, 13 angelegt, so daß ein ankommendes Gespräch von digitalen als auch von analogen Endgeräten entgegengenommen werden kann.

Ferner besteht die Möglichkeit, aufgrund einer vorgegebenen, im digitalen Speicher 2 abgelegten Signalisierungssequenz, intern das Gespräch von einem Endgerät zu einem anderen Endgerät umzulegen.

Falls bereits ein Endgerät sich in einem Belegtzustand befindet, wird ein ankommender Ruf parallel an alle nicht belegten Endgeräte angelegt, wobei gleichzeitig ein Hinweis zum besetzten Endgerät erfolgen kann (Anklopfen). Bei ISDN-Endgeräten mit Datenanzeige kann zusätzlich die Rufnummer des rufenden Teilnehmers angezeigt werden.

Es ist auch vorgebbar, daß ein ankommender Ruf nur an einzelne Endgeräte, z.B. nur an die Endgeräte, die im Wohnraum eines Hauses (nicht aber im Schlafzimmer) installiert sind, anlegbar ist.

Da normalerweise digitale Endgeräte 9 eine eigene Steuereinheit aufweisen, kann, gemäß einer weiteren Ausgestaltung der Erfindung, die universelle Teilnehmeranschlußbaugruppe 1 als integraler Teil des ISDN-Endgerätes ausgeführt werden, wobei die Funktionen der Steuereinheit 2 der Teilnehmeranschlußbaugruppe 1 durch die Steuereinheit des digitalen Endgerätes 9 mit ausgeführt werden können.

Die universelle Teilnehmeranschlußbaugruppe 1 ermöglicht somit eine optimale Anpassung an bereits bestehende Endgerätekonfigurationen und deren Leistungsmerkmalen in Verbindung mit den Vorteilen eines ISDN-Netzabschlusses.

Darüber hinaus ist jederzeit eine Erweiterung/Änderung der Endgerätekonfiguration analog wie digital ohne wesentlichen Mehraufwand durch einfache Programmierung möglich.

## Patentansprüche

1. Universelle Teilnehmeranschlußbaugruppe (1) zum Anschließen einer Vielzahl von Teilnehmerendgeräten (9, 10, 13) an ein diensteintegrierendes digitales Fernmeldenetz (8), bestehend aus
- einem internen Systembus (4),
- einer mit dem internen Systembus (4) verbundenen Steuereinheit (2, 3), die einen mit dem Systembus (4) verbundenen digitalen Speicher (3) enthält, in dem die zur funktionalen Steuerung und Überwachung der Teilnehmeranschlußbaugruppe (1) notwendigen Konfigurations-Parameter abgespeichert sind,
- wenigstens einer mit dem Systembus (4) verbundenen digitalen Teilnehmer-Schnittstelle (Schnittstelle Sₒ, Uₚₒ) (6) für digitale Endgeräte (9),
- wenigstens einer mit dem Systembus (4) verbundenen analogen Teilnehmer-Schnittstelle (11) für analoge Endgeräte (10),
- wenigstens einer mit dem Systembus (4) verbundenen Funkteilnehmer-Schnittstelle (12) für drahtlose Endgeräte (13) und
- einer mit dem Systembus (4) verbundenen digitalen Netzschnittstelle (Schnittstelle Uₒ) (5) für das digitale Fernmeldenetz (8).

2. Universelle Teilnehmeranschlußbaugruppe nach Anspruch 1, mit im digitalen Speicher (3) der Steuereinheit (2) abgelegten Signalisierungssequenzen, die infolge eines teilnehmerseitigen Verbindungsaufbaus zur Erkennung eines teilnehmerseitigen Internverkehrs und zur Durchschaltung einer internen Verbindung zwischen teilnehmerseitigen Endgeräten (9, 10, 13) verwendet werden.

3. Universelle Teilnehmeranschlußbaugruppe nach Anspruch 1 oder 2, bei der ein ankommender Ruf parallel an alle angeschlossenen oder an einzeln vorgebare angeschlossene Endgeräte (9, 10, 13) anlegbar ist, die keinen Belegtzustand aufweisen, wobei gleichzeitig ein Hinweis auf einen ankommenden Ruf zum belegten Endgerät (9, 10, 13) übertragbar ist.

4. Universelle Teilnehmeranschlußbaugruppe nach einem der vorhergehenden Ansprüche, die als integraler Teil eines digitalen Endgerätes derart aufgebaut ist, daß eine Steuereinheit des digitalen Endgeräts die Funktionen der Steuereinheit (3, 2) der Teilnehmeranschlußbaugruppe (1) ausführt.

## Claims

1. A universal subscriber line module (1) for connecting a plurality of subscriber terminals (9, 10, 13) to an integrated services digital communication network (8), comprising
- an internal system bus (4),
- a control unit (2, 3) connected to the internal system bus (4) and including a digital memory (3) connected to the system bus (4) and containing the configuration parameters required to control and monitor the subscriber line module (1),
- at least one digital subscriber interface (interface S₀, U_{P0}) (6) connected to the system bus (4) for interfacing to digital terminals (9),
- at least one analog subscriber interface (11) connected to the system bus (4) for interfacing to analog terminals (10),
- at least one radiotelephone subscriber interface (12) connected to the system bus (4) for interfacing to wireless terminals (13), and
- a digital network interface (interface U₀) (5) connected to the system bus (4) for interfacing to the digital communication network (8).

2. A universal subscriber line module as claimed in claim 1 wherein the digital memory (3) of the control unit (2) contains signalling sequences which are used to detect internal traffic and to switch through internal calls between subscriber terminals (9, 10, 13).

3. A universal subscriber line module as claimed in claim 1 or 2 wherein an incoming call can be applied in parallel to all connected or to individually predeterminable connected terminals (9, 10, 13) which are not busy, with a signal indicative of an incoming call being simultaneously transmissible to the busy terminal (9, 10, 13).

4. A universal subscriber line module as claimed in any one of the preceding claims which forms an integral part of a digital terminal and is constructed in such a way that a control unit of the digital terminal performs the functions of the control unit (3, 2) of the subscriber line module (1).

## Revendications

1. Bloc universel de raccordement d'abonné (1) pour raccorder une pluralité de terminaux d'abonné (9, 10, 13) à un réseau numérique de télécommunications à intégration de services (8), constitué
- d'un bus de système interne (4),
- d'une unité de commande (2, 3) qui est reliée au bus de système interne (4) et qui contient une mémoire numérique (3) qui est reliée au bus de système (4) et dans laquelle sont mémorisés les paramètres de configuration nécessaires pour la commande et la surveillance fonctionnelles du bloc de raccordement d'abonné (1),
- d'au moins une interface abonné numérique reliée au bus de système (4) (interface Sₒ, Uₚₒ) (6) pour terminaux numériques (9),
- d'au moins une interface abonné analogique (11) reliée au bus de système (4) pour terminaux analogiques (10),
- d'au moins une interface abonné du radiotéléphone (12) reliée au bus de système (4) pour terminaux sans fil (13) et
- d'une interface réseau numérique (interface Uₒ) (5) reliée au bus de système (4) pour le réseau numérique de télécommunications (8).

2. Bloc universel de raccordement d'abonné selon la revendication 1, comportant des séquences de signalisation qui sont mémorisées dans la mémoire numérique (3) de l'unité de commande (2) et qu'à la suite de l'établissement d'une liaison côté abonné on emploie pour identifier un trafic interne côté abonné et pour établir une liaison interne directe entre des terminaux (9, 10, 13) côté abonné.

3. Bloc universel de raccordement d'abonné selon la revendication 1 ou 2, dans le cas duquel un appel qui arrive peut parvenir en parallèle à tous les terminaux (9, 10, 13) raccordés ou à différents terminaux raccordés (9, 10, 13) à prescrire et qui ne présentent pas d'état d'occupation, une indication d'un appel arrivant pouvant être simultanément transmise au terminal (9, 10, 13) occupé.

4. Bloc universel de raccordement d'abonné selon l'une des revendications précédentes, qui est construit, en tant que partie intégrante d'un terminal numérique, de façon qu'une unité de commande du terminal numérique assure les fonctions de l'unité de commande (3, 2) du bloc de raccordement de d'abonné (1).
